# FASCICULE DE BREVET EUROPEEN

(11) **EP 2 005 649 B1**
(45) Date de publication et mention de la délivrance du brevet: **04.05.2016**
(21) Numéro de dépôt: 07731182.7
(22) Date de dépôt: 23.03.2007
(51) Int. Cl.: H04L 12/24

(54) **PROCEDÉ ET SYSTÈME POUR METTRE A JOUR DES CHANGEMENTS DE TOPOLOGIE D'UN RESEAU INFORMATIQUE**
VERFARHEN UND SYSTEM ZUR AKTUALISIERUNG VON TOPOLOGIEÄNDERUNGEN EINES COMPUTERNETZES
METHOD AND SYSTEM FOR UPDATING TOPOLOGY CHANGES OF A COMPUTER NETWORK

(30) Priorité: 31.03.2006 FR 0602850
(43) Date de publication de la demande: 24.12.2008
(73) Titulaire: InfoVista SAS, 91940 Les Ulis (FR)
(72) Inventeur: CAU, Stéphane, F-78120 Rambouillet (FR); MASSIOT, Julien, F-75013 Paris (FR)
(74) Mandataire: Pontet Allano & Associes
(86) Numéro de dépôt international: PCT/FR2007/000493
(87) Numéro de publication internationale: WO 2007/118957

(56) Documents cités:
- US-A1- 2004 032 852
- US-A1- 2004 059 807
- US-B1- 6 430 150

## Description

La présente invention se rapporte à un procédé et un système pour mettre à jour des changements de topologie d'un réseau informatique.

Les mécanismes classiques de gestion et de « provisioning » de la topologie réseau, se fondent généralement sur la découverte totale de l'infrastructure, de façon planifiée (journalière, hebdomadaire, etc.) puis mise à jour dans une base de données de topologie. Le processus pouvant être excessivement consommateur de ressources et de temps.

On connaît le document US 6430150 qui décrit un réseau de télécommunication dans lequel chaque noeud du réseau comporte des données de topologie physique et des données de topologie logique. Les différents noeuds du réseau sont reliés entre eux par des liens. En cas de défaillance d'un lien, le noeud le plus proche génère un signal d'alarme à l'endroit d'autres noeuds du réseau. Ensuite chaque noeud du réseau détermine un chemin alternatif de façon à rétablir la communication.

Le document (US 2004/0059807) décrit un processus pour déterminer la topologie d'un réseau en traitant les flux de données au moyen d'un analyseur réseau. Ces données permettant notamment de déterminer si le réseau comporte une boucle ou des commutateurs.

Le document (US 2004/0032852) décrit un processus pour intégrer un routeur dans un réseau de communication mobile. Les données transmises par différents routeurs sont traitées de façon à classer ces routeurs par ordre de priorité.

Il existe néanmoins déjà des mécanismes permettant de traquer certains changements dans le domaine des réseaux informatiques, mais ces derniers sont basés sur des compteurs de temps, définissant la dernière connexion par exemple, d'un utilisateur sur un équipement donné, impliquant ou non un changement de configuration.

L'utilisation de ces compteurs de temps est une première approche, mais elle ne permet pas d'identifier des configurations réalisées par le biais d'outils externes de configuration au moyen des protocoles propriétaires ou des « Set » SNMP ("Simple Network Management Protocol"). Un autre inconvénient de ces compteurs est qu'ils sont basés sur l'équipement dans sa globalité et non pas sur un ou plusieurs points bien spécifiques (Technologie, Elément de Configuration, etc.). Par ailleurs, ces compteurs peuvent effectuer des mises à jours même si la configuration n'a pas changé, par exemple dès que l'utilisateur a simplement sauvegardé sa configuration avant de quitter sa console. Ces compteurs autorisent donc des mises a jour non nécessaires et font parfois l'impasse sur des changements.

La présente invention a pour but de remédier aux inconvénients précités en proposant un nouveau procédé pour détecter les changements de topologie de manière efficace et rapide.

On atteint le but précité avec un procédé pour détecter des changements de topologie d'un réseau informatique, ce procédé comprenant les étapes suivantes :
acquisition des données brutes des tables de configuration des éléments du réseau au cours de scrutations principales successives, entre deux scrutations principales successives, on réalise les étapes suivantes :
   - calcul et stockage d'une valeur de "checksum" pour chaque élément du réseau ayant des données brutes considérées comme sensibles,
   - au moins une scrutation secondaire permettant de récupérer à nouveau lesdites données sensibles de chaque élément correspondant,
   - comparaison, à chaque scrutation secondaire et pour chaque élément dit sensible, de la valeur de checksum précédemment stockée avec une nouvelle valeur de "checksum" calculée avec les nouvelles données sensibles,
   - pour chaque élément sensible, lorsque les deux valeurs de "checksum" diffèrent, mise à jour dans une base de données de topologie uniquement des données de topologie relatives à l'élément correspondant.

Pour les éléments qui ne présentent pas de données brutes sensibles, on met directement à jour la base de topologie pour ces éléments là.

Avec le procédé selon la présente invention, on peut immédiatement vérifier uniquement le noeud du réseau dans lequel le changement est intervenu. On ne réalise pas de mise à jour relative à tout le réseau à chaque instant comme dans l'art antérieur.

Avantageusement, les données brutes sont considérées sensibles lorsqu'elles obéissent à des critères prédéterminés contenus dans un fichier de configuration.

Le procédé selon la présente invention permet ainsi de traquer les changements de topologie réseau suivant des critères définis par configuration, et de vérifier que ces critères n'ont pas varié dans le temps. Ce mécanisme permet ainsi d'identifier seulement les éléments réseaux nécessitant une mise à jour de leur configuration dans la base de données de topologie, permettant ainsi à des produits tiers d'être le plus rapidement possible au courant de tout changement, évitant ainsi des pertes d'information et des latences inutiles.

Selon une caractéristique avantageuse de l'invention, les scrutations principales et secondaires sont régulières; les scrutations secondaires se faisant à une fréquence, par exemple quelques minutes, largement supérieure à la fréquence des scrutations principales, de façon journalière par exemple. Le processus peut donc s'exécuter de façon automatique. Autrement, les scrutations principales et secondaires peuvent aussi être enclenchées à la suite d'un événement prédéterminé tel que par exemple de type "Trap SNMP", Evénement System, association de taches dans le fichier de configuration, au démarrage réseau, etc. Ceci permet de contourner les problèmes de granularité temporelle dus à la planification de processus de scrutation.

Selon l'invention, pour la mise à jour des données de topologie d'un élément sensible, on récupère les données brutes sensibles contenues dans la mémoire cache, ces données brutes sensibles provenant de la scrutation secondaire venant d'être réalisée.. Ceci permet d'optimiser les étapes de scrutation réseau. En effet, dans les données brutes collectées pour le calcul du "CheckSum", certaines données basées sur la configuration peuvent être conservées en mémoire cache et serviront ensuite, le cas échéant, à la mise à jour de la base de données de topologie. Ceci permet d'éviter le "double-polling", et de préserver de ce fait les équipements impactés, du stress relatif à des interrogations trop proches (Stress SNMP, ICMP).

A titre d'exemple, on peut calculer la valeur de "checksum" courante au moyen d'un algorithme de redondance cyclique.

Suivant un autre aspect de l'invention, il est proposé un serveur pour détecter des changements de topologie d'un réseau informatique, ce serveur comprenant :
- des moyens pour réaliser des scrutations principales successives des éléments du réseau et acquérir des données brutes des tables de configuration desdits éléments du réseau,
- des moyens pour calculer et stocker une valeur de "checksum" pour chaque élément du réseau ayant des données brutes considérées comme sensibles,
- des moyens pour réaliser au moins une scrutation secondaire permettant de récupérer à nouveau lesdites données sensibles de chaque élément correspondant,
- des moyens pour comparer, à chaque scrutation secondaire et pour chaque élément dit sensible, la valeur de checksum précédemment stockée avec une nouvelle valeur de "checksum" calculée avec les nouvelles données sensibles,
- pour chaque élément sensible, lorsque les deux valeurs de "checksum" diffèrent, des moyens pour mettre à jour dans une base de données de topologie uniquement des données de topologie relatives à l'élément correspondant.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique générale d'un système selon l'art antérieur, et
La figure 2 est une vue schématique générale d'un système selon la présente invention.

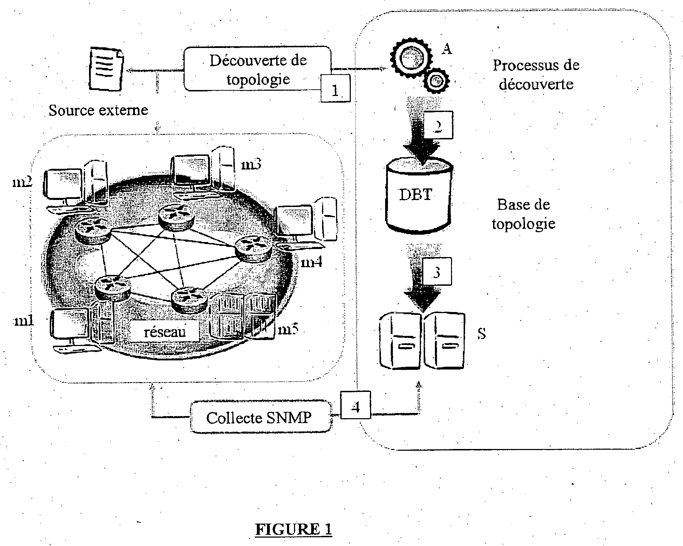

Sur la figure 1 selon l'art antérieur, on distingue un réseau informatique équipé d'une pluralité de machines m1 à m5. L'application de détection selon l'art antérieur comprend une application de découverte A qui est apte à scruter le réseau informatique et éventuellement d'autres ressources externes de façon à établir la topologie du réseau. C'est l'étape 1 de découverte de topologie. A l'étape 2, les données de la topologie sont stockées dans une base de données de topologie DBT. Au cours de la troisième étape, on renseigne des serveurs S en relation avec ledit réseau informatique sur la topologie de ce réseau. Ensuite, au moyen notamment de protocole SNMP, les serveurs S scrutent le réseau et prélèvent des données de performance.

En d'autres termes, la figure 1 illustre le processus classique de découverte et de « provisionning » d'une Infrastructure réseau comprenant essentiellement les étapes suivantes :
- Découverte de l'ensemble composant le réseau,
- Mise à jour de la base de Topologie,
- La topologie est ventilée sur les serveurs,
- Les serveurs démarrent l'interrogation des équipements et rapatrie les données.

Le problème avec la méthode selon l'art antérieur est la lenteur et une efficacité limité.

Par ailleurs, dans l'architecture selon l'art antérieur, l'ensemble des objets composant le réseau sont mis à jours de façon régulière, entraînant de gros volume de transaction, et la nécessité de réaliser ces opérations de façon très espacée.

Le système selon la présente invention propose par le biais d'une configuration simple de traquer certains éléments de configuration, en se basant sur le stockage en fichier de la valeur de "CheckSum" des tables de configurations passées en paramètre par l'utilisateur. La valeur de "CheckSum" peut être évaluée selon des algorithmes conventionnels et robustes de type CRC32 ("Cyclic Redundancy Check"). Le système va évaluer de façon régulière (configurable par l'utilisateur) si la valeur de "CheckSum" a varié, et le cas échéant mettre à jours dans la base de topologie l'élément et seulement ce dernier.

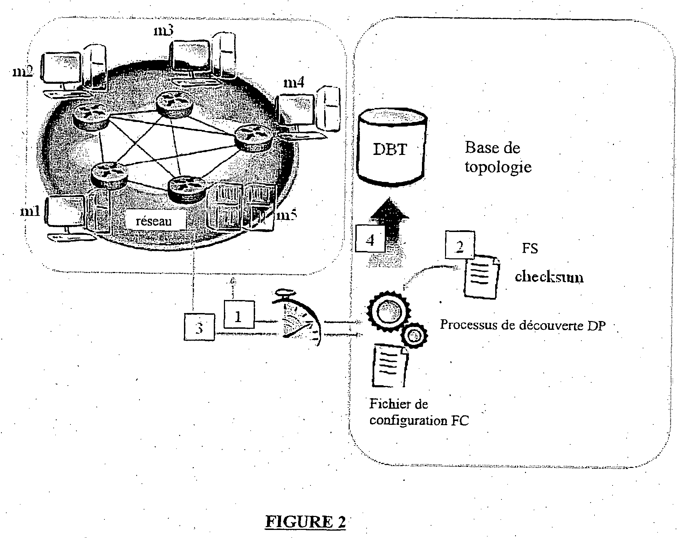

Sur la figure 2 on voit un système selon la présente invention. On distingue un réseau informatique constitué d'une pluralité de machines m1 à m5. L'application de découverte DP pour "discovery process" en langue anglaise, est associée à un fichier de configuration FC et à un fichier FS renfermant le "checksum". L'application de découverte est adaptée pour initialiser le processus de scrutation du réseau de manière automatique. En fait le fichier de configuration contient une planification. A l'étape 1, on lance donc la scrutation principale du réseau. Cette scrutation principale est journalière par exemple. On prélève des données brutes des pages de configuration des éléments du réseau. On vérifie si des éléments du réseau comporte des données brutes sensibles, c'est à dire obéissant à des critères prédéterminés et définis dans le fichier de configuration. Pour des éléments sensibles, on détermine le checksum et on le stocke dans le fichier FS.

Pour des éléments "non sensibles", on réalise la mise à jour au sein de la base de données de topologie.

Ensuite, pour les éléments sensibles, on réalise plusieurs scrutations secondaires successives et régulières à l'étape 3, mais uniquement sur les éléments (machines) sensibles de façon à récupérer les données brutes sensibles. A chaque scrutation secondaire et pour chaque élément sensible, on calcul un nouveau checksum que l'on compare au checksum précédent contenu dans le fichier FS. Si à l'issu de la comparaison, les deux checksums diffèrent, alors il y a eu un changement. Dans ce cas, on met à jour uniquement les données de topologie de l'élément sensible considéré.

Le schéma de la figure 2 présente donc un processus, selon la présente invention, permettant de traquer et de ne mettre à jour que les éléments nécessaires. Les étapes de déroulement peuvent être synthétisé de la manière suivante :
- Lancement de façon planifiée sur la base du fichier de configuration,
- Acquisition de la valeur de contrôle "checksum" et comparaison avec la précédente,
- Découverte d'un objet ayant eu des changements de configuration, et
- Mise à jour de la base de topologies.

La présente invention permet donc de traquer les changements de configuration d'un équipement informatique et ainsi de mettre à jour les données relatives à cet équipement dans une base de topologie. On calcule une valeur de checksum par le biais de l'utilisation d'algorithme de redondance cyclique pour contrôler les changements des tables de configuration des équipements. L'invention permet de ne mettre à jour que les équipements ayant subi des changements et ce de façon certaine car le - checksum est basé sur la configuration elle-même.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour détecter des changements de topologie d'un réseau informatique, **caractérisé en ce qu'**il comprend les étapes suivantes :
- acquisition des données brutes des tables de configuration des éléments (m1, ...m5) du réseau au cours de scrutations principales successives, entre deux scrutations principales (1) successives, on réalise les étapes suivantes :
- calcul et stockage (2) d'une valeur de "checksum" pour chaque élément du réseau ayant des données brutes considérées comme sensibles,
- au moins une scrutation secondaire (3) permettant de récupérer à nouveau lesdites données sensibles de chaque élément correspondant,
- comparaison, à chaque scrutation secondaire pour chaque élément dit sensible, de la valeur de checksum précédemment stockée avec une nouvelle valeur de "checksum" calculée avec les nouvelles données sensibles,
- pour chaque élément sensible, lorsque les deux valeurs de "checksum" diffèrent, mise à jour (4) dans une base de données de topologie uniquement des données de topologie relatives à l'élément correspondant.

2. Procédé selon la revendication 1, **caractérisé en ce que** les données brutes sont considérées sensibles lorsqu'elles obéissent à des critères prédéterminés contenus dans un fichier de configuration (FC).

3. Procédé selon la revendication 1 ou 2, **caractérisé en ce que** les scrutations principales (1) et secondaires (3) sont régulières; les scrutations secondaires se faisant à une fréquence largement supérieure à la fréquence des scrutations principales.

4. Procédé selon la revendication 1 ou 2, **caractérisé en ce que** les scrutations principales et secondaires sont enclenchées à la suite d'un événement prédéterminé.

5. Procédé selon l'une quelconque des revendications précédentes, **caractérisé en ce que** pour la mise à jour (4) des données de topologie d'un élément sensible, on récupère les données brutes sensibles contenues dans la mémoire cache, ces données brutes sensibles provenant de la scrutation secondaire venant d'être réalisée.

6. Procédé selon l'une quelconque des revendications précédentes, **caractérisé en ce qu'**on calcule la valeur de "checksum" courante au moyen d'un algorithme de redondance cyclique.

7. Serveur pour détecter des changements de topologie d'un réseau informatique, **caractérisé en ce qu'**il comprend:
- des moyens pour réaliser des scrutations principales (1) successives des éléments (m1, ... m5) du réseau et acquérir des données brutes des tables de configuration desdits éléments du réseau,
- des moyens pour calculer et stocker (2) une valeur de "checksum" pour chaque élément du réseau ayant des données brutes considérées comme sensibles,
- des moyens pour réaliser au moins une scrutation secondaire (3) permettant de récupérer à nouveau lesdites données sensibles de chaque élément correspondant,
- des moyens pour comparer, à chaque scrutation secondaire et pour chaque élément dit sensible, la valeur de checksum précédemment stockée avec une nouvelle valeur de "checksum" calculée avec les nouvelles données sensibles,
- pour chaque élément sensible, lorsque les deux valeurs de "checksum" diffèrent, des moyens pour mettre à jour (4) dans une base de données de topologie uniquement des données de topologie relatives à l'élément correspondant.

## Patentansprüche

1. Verfahren zur Erfassung von Änderungen der Topologie eines Computernetzes, **dadurch gekennzeichnet, dass** es die folgenden Schritte umfasst:
- Erfassen der Rohdaten der Konfigurationstabellen der Elemente (m1, ... m5) des Netzes im Laufe von aufeinanderfolgenden Hauptabfragen, zwischen zwei aufeinanderfolgenden Hauptabfragen (1) werden die folgenden Schritte durchgeführt:
- Berechnen und Speichern (2) eines "Checksum"-Wertes für jedes Element des Netzes, das als sensibel betrachtete Rohdaten hat,
- wenigstens eine Sekundärabfrage (3), die ermöglicht, die sensiblen Daten eines jeden entsprechenden Elements erneut zu gewinnen,
- bei jeder Sekundärabfrage (3) und für jedes sogenannte sensible Element, Vergleichen des zuvor gespeicherten Checksum-Wertes mit einem mit den neuen sensiblen Daten berechneten neuen "Checksum"-Wert,
- für jedes sensible Element, wenn die beiden "Checksum"-Werte abweichen, Aktualisieren (4) lediglich der Topologiedaten bezüglich des entsprechenden Elements in einer Topologiedatenbank.

2. Verfahren nach Anspruch 1, **dadurch gekennzeichnet, dass** die Rohdaten als sensibel betrachtet werden, wenn sie vorbestimmte, in einer Konfigurationsdatei (FC) enthaltene Kriterien erfüllen.

3. Verfahren nach Anspruch 1 oder 2, **dadurch gekennzeichnet, dass** die Hauptabfragen (1) und Sekundärabfragen (3) regelmäßig sind, wobei die Sekundärabfragen mit einer Frequenz erfolgen, die weitaus höher als die Frequenz der Hauptabfragen ist.

4. Verfahren nach Anspruch 1 oder 2, **dadurch gekennzeichnet, dass** die Hauptund die Sekundärabfragen im Anschluss an ein vorbestimmtes Ereignis angestoßen werden.

5. Verfahren nach einem der vorhergehenden Ansprüche, **dadurch gekennzeichnet, dass** für die Aktualisierung (4) der Topologiedaten eines sensiblen Elements die im Cache-Speicher enthaltenen sensiblen Rohdaten zurückgewonnen werden, wobei diese sensiblen Rohdaten von der soeben durchgeführten Sekundärabfrage stammen.

6. Verfahren nach einem der vorhergehenden Ansprüche, **dadurch gekennzeichnet, dass** der laufende "Checksum"-Wert mittels eines zyklischen Redundanzalgorithmus berechnet wird.

7. Server zur Erfassung von Änderungen der Topologie eines Computernetzes, **dadurch gekennzeichnet, dass** er umfasst:
- Mittel zum Durchführen von aufeinanderfolgenden Hauptabfragen (1) der Elemente (m1, ... m5) des Netzes und zum Erfassen von Rohdaten der Konfigurationstabellen der Elemente des Netzes,
- Mittel zum Berechnen und Speichern (2) eines "Checksum"-Wertes für jedes Element des Netzes, das als sensibel betrachtete Rohdaten hat,
- Mittel zum Durchführen wenigstens einer Sekundärabfrage (3), die ermöglicht, die sensiblen Daten eines jeden entsprechenden Elements erneut zu gewinnen,
- Mittel, um bei jeder Sekundärabfrage und für jedes sogenannte sensible Element, den zuvor gespeicherten Checksum-Wert mit einem mit den neuen sensiblen Daten berechneten neuen "Checksum"-Wert zu vergleichen,
- für jedes sensible Element, wenn die beiden "Checksum"-Werte abweichen, Mittel zum Aktualisieren (4) lediglich von Topologiedaten bezüglich des entsprechenden Elements in einer Topologiedatenbank.

## Claims

1. Method for detecting topology changes of a computer network, **characterized in that** it comprises the following steps:
- acquisition of the raw data from the configuration tables of the network elements (m1, ...m5) during successive primary pollings, the following steps being carried out between two successive primary pollings (1):
- calculation and storage (2) of a checksum value for each network element having raw data which are considered to be sensitive,
- at least one secondary polling (3), allowing said sensitive data to be retrieved again from each corresponding element,
- comparison of the previously-stored checksum value, at each secondary polling (3) and for each element termed sensitive, with a new checksum value calculated with the new sensitive data,
- for each sensitive element, when the two checksum values differ, updating (4) in a topology database only the topology data relative to the corresponding element.

2. Method according to claim 1, **characterized in that** the raw data are considered to be sensitive when they conform to predetermined criteria contained in a configuration file (FC).

3. Method according to claim 1 or 2, **characterized in that** the primary (1) and secondary (3) pollings are regular; the secondary pollings being performed at a frequency substantially greater than the frequency of the primary pollings.

4. Method according to claim 1 or 2, **characterized in that** the primary and secondary pollings are triggered following a predetermined event.

5. Method according to any one of the previous claims, **characterized in that** for the updating (4) of the topology data of a sensitive element, the sensitive raw data contained in the cache memory are retrieved, these sensitive raw data originating from the secondary polling just carried out.

6. Method according to any one of the previous claims, **characterized in that** the current checksum value is calculated using a cyclical redundancy algorithm.

7. Server for detecting topology changes of a computer network, **characterized in that** it comprises:
- means for carrying out successive primary (1) pollings of the network elements (m1,...m5) and acquiring raw data from the configuration tables of said network elements,
- means for calculating and storing (2) a checksum value for each network element having raw data which are considered to be sensitive,
- means for carrying out at least one secondary polling (3), allowing said sensitive data to be retrieved again from each corresponding element,
- means for comparing the previously-stored checksum value, at each secondary polling and for each element termed sensitive, with a new checksum value calculated with the new sensitive data,
- for each sensitive element, when the two checksum values differ, means for updating (4) in a topology database only the topology data relative to the corresponding element.
